**Europäisches Patentamt**

**European Patent Office**

**Office européen des brevets**

(11) Veröffentlichungsnummer: **0 255 906 B1**

(12) **EUROPÄISCHE PATENTSCHRIFT**

(45) Veröffentlichungstag der Patentschrift: **03.07.91**

(51) Int. Cl.⁵: **G01L 7/08**, G01L 9/14, G01L 1/14

(21) Anmeldenummer: **87110853.6**

(22) Anmeldetag: **27.07.87**

(54) **Membran für Kraftmesseinrichtungen.**

(30) Priorität: **06.08.86 DE 3627127**

(43) Veröffentlichungstag der Anmeldung:
**17.02.88 Patentblatt 88/07**

(45) Bekanntmachung des Hinweises auf die
Patenterteilung:
**03.07.91 Patentblatt 91/27**

(84) Benannte Vertragsstaaten:
**AT BE CH FR GB IT LI**

(56) Entgegenhaltungen:
**WO-A-82/01068**
**DE-A- 3 023 719**
**DE-A- 3 238 951**
**US-A- 4 340 877**

(73) Patentinhaber: **Pfister GmbH**
**Stätzlinger Strasse 70**
**W-8900 Augsburg(DE)**

(72) Erfinder: **Häfner, Hans W.**
**Fichtenweg 15**
**W-8890 Aichach (FRG)(DE)**

(74) Vertreter: **Kahler, Kurt, Dipl.-Ing.**
**Postfach 1249 Gerberstrasse 3**
**W-8948 Mindelheim(DE)**

## Beschreibung

Die Erfindung betrifft eine Membran für Kraftmeßeinrichtungen gemäß dem Oberbegriff des Patentanspruchs 1.

Die DE-AS 11 29 317 befaßt sich mit einer Kraftmeßeinrichtung mit einem induktiv arbeitendem Abstandsänderungssensor, der die Positionsveränderung einer Membran mittels eines Fühlers feststellt. Die Membran ist längs ihres Umfangs mit einem starren Ring befestigt, der an einer Grundplatte angebracht ist. Die Membran hat in radialer Richtung eine ganz spezielle Ausbildung, die eine Herstellung erschwert. Der Übergang zwischen dem starren Ring und der Membran ist verhältnismäßig stark. Der Aufbau des Sensors ist nicht erkennbar.Beim gezeigten induktiven Sensor ist für die Erzeugung eines zuverlässigen Signals eine verhältnismäßig große Positionsveränderung der Membran erforderlich. Deshalb sind besondere Maßnahmen zur Kompensation der Änderung im Gasdruck innerhalb des Raumes getroffen, der durch die Membran,den Ring und die Grundplatte gebildet wird. Da der Ring an der Grundplatte mittels Schrauben befestigt ist, besteht zwischen diesen beiden Elementen keinerlei Elastizität. Die Einrichtung ist deshalb empfindlich gegen seitlich gerichtete Kräfte.

Die US-PS 4,340,877 offenbart einen Druckwandler zur Abgabe eines elektrischen Signals, das den an das Innere einer Aneroidkapsel angelegten Druck darstellt, wobei zumindest eine Wand als Membran ausgebildet ist. In der Mitte der Membran ist gegenüber einem Hall-IC ein Magnet angebracht. Eine Druckänderung bringt eine Änderung des Abstandes zwischen dem Magneten und dem Hall-IC in Richtung einer zentralen Achse des Wandlers mit sich. Der bekannte Druckwandler benötigt eine eigene Abstützstruktur zur Anbringung des Hall-IC und seiner zugeordneten Schaltungen außerhalb des durch die Aneroidkapsel gebildeten Raumes. Zum Schutze des Hall-IC und seiner zugeordneten Schaltungen muß die ganze Anordnung nochmals in einem Gehäuse untergebracht sein. Ein derartiger Drucksensor läßt sich nicht zur Messung von Kräften verwenden, die auf den Wandler wirken.

Die DE-OS 32 38 951 offenbart eine Kraftmeßeinrichtung mit zwei Membranen, auf denen Dehnungsmeßstreifen angebracht sind. Die beiden Membranen sind durch Befestigung an einem Mittelbolzen in Reihe geschaltet und verlaufen parallel im Abstand zueinander. Ferner sind die beiden Membranen längs ihres Umfangs festgespannt. Die Bewegung des Mittenbolzens bei Krafteinwirkung in Richtung der zentralen Achse ist durch einen Anschlag begrenzt, der auf der Bodeninnenseite eines topfförmigen Gehäuses angebracht ist.

Der Erfindung liegt die Aufgabe zugrunde, eine Membran für Kraftmeßeinrichtungen und eine Kraftmeßeinrichtung anzugeben, die einen kompakten und einfachen Aufbau besitzen, wobei alle empfindlichen Elemente ohne besondere Vorkehrungen geschützt sind. Ferner soll die Membran bzw. die Kraftmeßeinrichtung besonders unempfindlich gegen Seitenkräfte sein und eine einfache Kompensation bezüglich Nichtlinearitäten und Temperatureinflüssen bieten.

Diese Aufgabe wird gemäß der Erfindung gelöst durch eine Membran mit den Merkmalen des Kennzeichens des Patentanspruchs 1.

Die erfindungsgemäße Membran ist besonders unempfindlich gegen seitliche Kräfte und läßt sich durch einfache Maßnahmen, wie die Materialauswahl und Vorspannung bezüglich der Linearität der Messung und zur Temperaturkompensation optimal ausbilden.

Bevorzugte Weiterbildungen und Anwendungen der erfindungsgemäßen Membran sind in den Ansprüchen 2-10 gekennzeichnet.

Ausführungsbeispiele der Erfindung werden nachstehend anhand der Zeichnung näher erläutert. Es zeigen

Fig. 1 eine Seitenansicht, teilweise im Schnitt, einer ersten Ausführungsform einer erfindungsgemäßen Kraftmeßeineinrichtung mit einer Membran,

Fig. 2 eine Ansicht ähnlich derjenigen der Fi. 1 einer zweiten Ausführungsform einer erfindungsgemäßen Kraftmeßeinrichtung mit zwei gegeneinander geschalteten Membranen, zweiten Ausführungsform einer erfindungsgemäßen Kraftmeßeinrichtung mit zwei gegeneinander geschalteten Membranen,

Fig. 3 eine Ansicht ähnlich derjenigen der Fig. 1 einer dritten Ausführungsform der erfindungsgemäßen Kraftmeßeinrichtung mit zwei übereinander angeordneten Membranen und

Fig. 4 eine Ansicht ähnlich derjenigen der Fig. 1 mit vier Membranen.

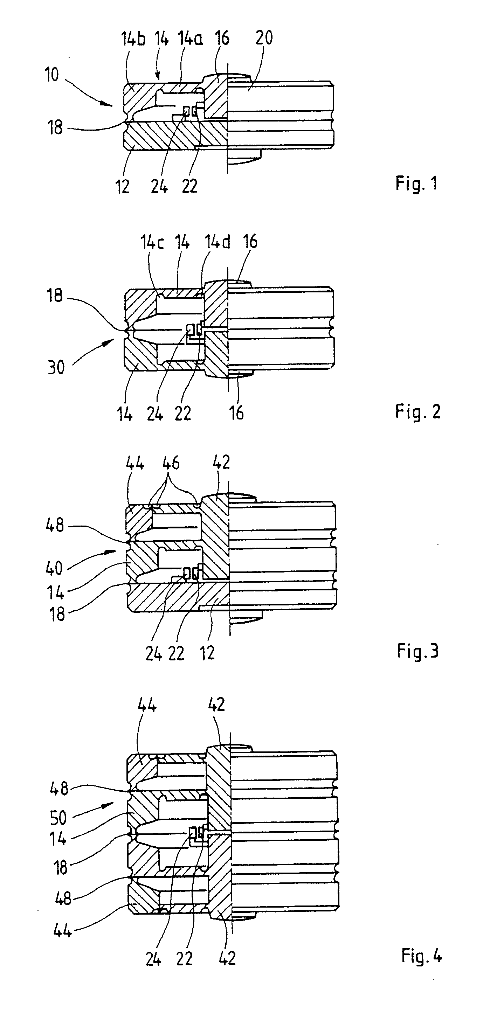

Fig. 1 zeigt eine Kraftmeßdose 10 mit einer biegesteifen Grundplatte 12 und einer federnden Membran 14, auf deren Oberseite eine Krafteinleitungskalotte 16 angebracht ist. Die Kalotte 16 ist nach innen durch einen Kraftaufnahmebolzen 20 fortgesetzt, dessen Stirnfläche in unbelastetem Zustand der Kraftmeßdose einen geringen Abstand aufweist. Am Kraftaufnahmebolzen 20 ist seitlich ein Erregungselement insbesondere ein Magnet 22 befestigt der bevorzugt aus SmCo besteht. In geringem Abstand gegenüberliegend ist abgestützt auf der Oberseite der Grundplatte 12 ein Hallgenerator angeordnet, der bevorzugt aus GaAs besteht.

Das Innere der Kraftmeßdose ist dadurch hermetisch abgeschlossen, daß die Membran 14 längs des ganzen Umfangs 18 biegeelastisch mit der Grundplatte 12 verschweißt ist.

Bei Krafteinwirkung bewegt sich der Kraftaufnahmebolzen 20 in Richtung der Grundplatte 12, wobei auch der Magnet 22 in seiner Position verändert wird, was im Hallgenerator 24 ein entsprechendes Spannungssignal hervorruft, das über nicht gezeigte Leitungen zur Auswertung aus der Kraftmeßdose herausgeführt wird. Bei Überlastung liegt die Stirnfläche des Kraftaufnahmebolzens 20 auf der Oberseite der Grundplatte 12 auf, so daß keine Beschädigung der Kraftmeßdose erfolgt.

Fig. 2 zeigt eine weitere Ausführungsform der erfindungsgemäßen Kraftmeßeinrichtung mit einer Kraftmeßdose 30, die aus zwei gegeneinander gelegten Membranen gemäß Fig. 1 besteht. Die Grundplatte 12 fällt weg und eine Krafteinwirkung auf die Kraftmeßdose bewirkt einen doppelten Weg zwischen Hallgenerator 24 und Magnet 22, wobei in diesem Falle der Hallgenerator 24 an der Seite des unteren Kraftaufnahmebolzen 20 angebracht ist. Die Ränder der beiden Membranen 14 sind miteinander bei 18 biegeelastisch verschweißt.

Fig. 3 zeigt eine dritte Ausführungsform der erfindungsgemäßen Kraftmeßeinrichtung, bei der eine Kompensation von Querkräften dadurch stattfindet, daß zwei Membranen gleichgerichtet übereinander an einem Kraftaufnahmebolzen 42 angebracht sind. Bei dieser Kraftmeßdose 40 wird wiederum eine Grundplatte 12 verwendet, die den Hallgenerator 24 trägt. Die erste Membran 14 ist mit ihrem Rand wiederum am Umfang der Grundplatte 12 verschweißt. Über dieser ersten Membran 14 ist eine zweite Membran 44 angeordnet, deren unterer Rand 48 biegeelastisch mit dem oberen Rand der ersten Membran 14 verschweißt ist. Die Membran 44 ist wiederum mit dem Kraftaufnahmebolzen 42 verbunden und erstreckt sich von diesem senkrecht zu dessen Längsachse hinweg.

Wie ersichtlich, ist die zweite Membran 44 in entgegengesetzter Weise mit verdünnten Stellen 46 versehen, wie die erste Membran 14. Eine derartige Ausgestaltung der beiden Membranen 14, 44 kompensiert eine Querbelastung der Kraftmeßdose bei Anlegen einer Kraft in einer von der senkrechten abweichenden Richtung.

Fig. 4 veranschaulicht eine vierte Ausführungsform der erfindungsgemäßen Kraftmeßeinrichtung als Verdoppelung der Ausführungsformen der Figuren 2 und 3. Bei dieser Kraftmeßdose 50 ist die Grundplatte 12 der Fig. 3 wiederum ersetzt durch die spiegelbildliche Anordnung der Membranen 14, 44 der Ausführungsform der Fig. 3. Hierdurch ergibt sich ein besonders großes Ausgangssignal, während andererseits Querbelastungen aufgefangen werden.

Bei dem vorstehenden Ausführungsbeispielen sind die Membranen mit der Grundplatte 12 bzw. miteinander biegeelastisch verschweißt. Andere Verbindungsarten wie Kleben oder dergleichen sind möglich.

Als Beispiel für die Positionsänderungsfeststellung wurde die Kombination Hallgenerator mit Magnet bevorzugt verwendet. In Frage kommen können auch andere miniaturisierte Positionsfeststellkombinationen, die durch den hermetischen Abschluß vor Umwelteinflüssen absolut geschützt sind.

Beispielsweise liefert ein im Magnetfeld eines SmCo-Magneten liegender GaAs-Hallgenerator bei der seitlichen Verschiebung des Magneten eine dem Verschiebeweg proportionale Ausgangsspannung von etwa 10 mV/0,1 mm. Es sei erwähnt, daß auch die Abgleichschaltung für den Hallgenerator im Inneren der Kraftmeßdose untergebracht werden kann.

Für die Erzielung hoher Ausgangssignale und zur Kompensation asymmetrischer Krafteinleitung können auch zwei oder mehrere Hallgeneratoren mit zugeordneten Magneten in einer Kraftmeßzelle eingesetzt werden.

Abschließend sei noch auf ein Merkmal der erfindungsgemäßen Membran hingewiesen, das von allgemeiner Bedeutung ist. Wie die Figuren zeigen, besitzt jede Membran 14 eine verhältnismäßig dünne elastische zentrale Scheibe 14a, die von einem im Verhältnis zur Dicke der Scheibe starken Torsionsring 14b umgeben ist. Die Scheibe 14a und der Torsionsring 14b können aus gleichem oder aber etwa zur Temperaturkompensation unterschiedlichem Material hergestellt sein. Der Torsionsring 14b ist einerseits bei 18 biegeelastisch mit der Grundplatte 12 bzw. einem Rand einer weiteren Membran verschweißt und steht mit der Scheibe 14a an einer im Querschnitt gesehen diagonal dieser Schweißnaht gegenüberliegenden, verdünnten Stelle 14c in Verbindung. Da Membranen im allgemeinen eine nichtlineare Kennlinie besitzen, kann mittels des Torsionsringes gegebenenfalls unter Wahl eines anderen Werkstoffes bzw. der entsprechenden Dimensionen eine Kompensation der Nichtlinearität erreicht werden. Durch diese spezielle Anordnung wird der Einfluß von Querkräften wesentlich verringert.

Da Membranen zur Druckmessung im allgemeinen eine geringe Nichtlinearität aufweisen, werden erfindungsgemäß Maßnahmen zur Erhöhung der Genauigkeit getroffen. So kann eine der beiden Membranen 14 der Fig. 3 in einer Kraftrichtung vorgespannt werden oder es werden beide Membranen 14 in entgegengesetzter Richtung vorgespannt.

Zur Linearisierung des Ansprechverhaltens des Hallgenerators 22, 24 kann mindestens ein weiterer Hallgenerator 22, 24 im Inneren der Kraftmeßeinrichtung angeordnet werden, wobei die Relativlage zwischen Magnet 22 und Hallgenerator 24 der beiden Anordnungen 22, 24 mit unterschiedlicher Versetzung gewählt wird. Dabei können die jeweiligen Elementepaare 22, 24 entweder senkrecht übereinander oder bevorzugt umfangsmäßig symmetrisch verteilt angeordnet sein. Diese Maßnahme kann nicht nur zur Linearisierung des Ansprechverhaltens des Sensors 22, 24 sondern auch zum Ausgleich der Nichtlinearität der Membran(en) ausgenutzt werden. Umgekehrt kann auch die Bemessung der Vorspannung der Membran(en) zur Kompensation von Nichtlinearitäten des Sensors 22, 24 verwendet werden.

Dies bedeutet, daß durch Kombination dieser Maßnahmen, nämlich die Anordnung mehrerer Membranen, deren Dimensionierung und Materialauswahl, deren Vorbelastung und die geeignete Wahl der Versetzung des Magneten 22 zum Hallgenerator 24 von ein oder mehreren Sensorelementen 22, 24 eine ausgezeichnete Linearität der erfindungsgemäßen Kraftmeßeinrichtung über einen sehr großen Meßbereich erhalten werden kann.

**Ansprüche**

1. Membran (14) für Kraftmeßeinrichtungen mit einer elastischen zentralen Scheibe (14a), die von einem Umfangsring (14b) gehalten ist und einen zentralen Krafteinleitungsansatz trägt und die mit mindestens einem Sensor (22,24) zur Bestimmung einer angelegten Kraft versehen ist, dadurch gekennzeichnet, dass der Umfangsring ein Torsionsring (14b) ist, der eine geringere Elastizität hat wie die Scheibe (14a) und der mit der Scheibe (14a) bzw. einem Gegenelement (12) an im Querschnitt gesehen diametral gegenüberliegenden Punkten biegeelastisch verbunden bzw. verbindbar ist.

2. Membran nach Anspruch 1 dadurch gekennzeichnet, daß der Torsionsring (14b) und die Scheibe (14a) einstückig ausgeführt sind.

3. Membran nach Anspruch 1 oder 2, dadurch gekennzeichnet, daß der Torsionsring (14b) mit der zentralen Scheibe (14a) bzw. dem Gegenelement (12; 14; 44) durch biegeelastische Verschweißung bzw. einen verdünnten Übergang (14c) verbunden ist.

4. Membran nach einem der Ansprüche 1 - 3, dadurch gekennzeichnet, daß zur Linearisierung des Ansprechverhaltens und/oder zur Temperaturkompensation die Elastizität des Torsionsringes (14b) gegenüber der Scheibe (14a) entsprechend gewählt ist und/oder der Torsionsring (14b) gegenüber der Scheibe (14a) bzw. dem Gegenelement (12) entsprechend vorgespannt ist.

5. Kraftmeßeinrichtung in der Form einer Kraftmeßdose mit mindestens einer Membran nach einem der Ansprüche 1-4, dadurch gekennzeichnet, daß der Sensor aus mindestens einem Hallgenerator (24) und mindestens einem Magneten (22) besteht, die in einer derartigen Lagebeziehung zueinander an der Innenseite der Membran (10) bzw. des Gegenelements (12) angebracht sind, dass bei Krafteinleitung eine Relativbewegung zwischen dem Hallgenerator (24) und dem Magneten (22) ein entsprechendes Signal hervorruft.

6. Kraftmeßeinrichtung in Form einer Kraftmeßdose mit mindestens einer Membran nach einem der Ansprüche 1-4, oder nach Anspruch 5, dadurch gekennzeichnet, daß das Gegenelement eine steife Grundplatte (12) ist.

7. Kraftmeßeinrichtung in Form einer Kraftmeßdose mit mindestens einer Membran nach einem der Ansprüche 1-4, oder nach Anspruch 5, dadurch gekennzeichnet, daß die Membran (14) durch eine weitere Membran (14; 44) mit umgekehrtem Biegeverhalten verbunden ist, die parallel zur ersten Membran angeordnet ist.

8. Kraftmeßeinrichtung nach Anspruch 7, dadurch gekennzeichnet, daß die beiden übereinander angeordneten Membrane (14; 44) spiegelbildlich angeordnet sind.

9. Kraftmeßeinrichtung, in Form einer Kraftmeßdose mit mindestens einer Membran nach einem der Ansprüche 1-4, oder nach einem der Ansprüche 6-8, dadurch gekennzeichnet, daß mehrere Sensoren (22,24) umfangsmäßig und/oder achsial verteilt angeordnet sind.

10. Kraftmeßeinrichtung nach Anspruch 9, dadurch gekennzeichnet, daß zur Linearisierung des Ansprechverhaltens der Kraftmeßeinrichtung die Sensoren zueinander in einer bestimmten Versetzung angeordnet sind.

**Claims**

1. Diaphragm force measuring devices (14) including an elastic central disk (14a) supported by a peripheral ring (14b) and provided with a central force introduction projection and provided with at least one sensor (22, 24) for determining a force applied thereto, characterized in that

the peripheral ring is a torsion ring (14b) having a lower elasticity than the disk (14a) and being connected or connectable deflection-elastically with the disk (14a) or an opposing element (12), respectively, at, considering the cross section, diametrally opposing points.

2. Diaphragm of claim 1, characterized in that the torsion ring (14b) and the disk (14a) are formed integrally.

3. Diaphragm of claim 1 or 2, characterized in that the torsion ring (14b) is connected with the central disk (14a) or the opposing element (12; 14; 44) by deflectionelastical welding or by a thinned transition (14c).

4. Diaphragm of any of the claims 1 to 3, characterized in that for linearizing the response and/or for temperature compensation the elasticity of the torsion ring (14b) is correspondingly selected in respect of the disk (14a) and/or the torsion ring (14b) is correspondingly biased in respect of the disk (14a) or the opposing element (12) respectively.

5. Force measuring device in the form of a force measuring box including at least one diaphragm according to any of the claims 1 to 4, characterized in that the sensor consists of at least one Hall generator (24) and at least one magnet (22) arranged in such a positional relation to each other at the interior side of the diaphragm (10) or the opposing element (12) that upon force introduction a relative movement between the Hall generator (24) and the magnet (22) causes a corresponding signal.

6. Force measuring device in the form of a force measuring box including at least one diaphragm according to any of the claims 1 to 4 or to claim 5, characterized in that the opposing element is a rigid base plate (12).

7. Force measuring device in the form of a force measuring box including at least one diaphragm according to any of the claims 1 to 4 or to claim 5, characterized in that the diaphragm (14) is connected to a further diaphragm (14; 44) having an inverse deflection response and being arranged in parallel to the first diaphragm.

8. Force measuring device of claim 7, characterized in that the two diaphragms (14; 44) arranged on top of each other are provided in a mirror-inverted manner.

9. Force measuring device in the form of a force measuring box including at least one diaphragm according to any of the claims 1 to 4 or according to any of the claims 6 to 8, characterized in that several sensors (22, 24) are arranged peripherally and/or axially distributed.

10. Force measuring device of claim 9, characterized in that for linearizing the response of the force measuring device the sensors are arranged with a predetermined off-setting.

**Revendications**

1. Membrane (14) pour dispositifs dynamométriques comprenant un disque central élastique (14a) qui est maintenu par une bague périphérique (14b), qui porte un embout central d'introduction des forces et qui est muni d'au moins un capteur (22, 24) pour la détermination d'une force appliquée, caractérisée par le fait que la bague périphérique est une bague de torsion (14b) qui présente une élasticité plus faible que le disque (14a) et qui est reliée ou qui peut être reliée, respectivement, de manière élastique à la flexion, au disque (14a) ou à un élément conjugué (12), respectivement, en des points qui, vus en section transversale, sont diamétralement opposés.

2. Membrane selon la revendication 1, caractérisée par le fait que la bague de torsion (14b) et le disque (14a) sont réalisés en une seule pièce.

3. Membrane selon la revendication 1 ou 2, caractérisée par le fait que la bague de torsion (14b) est reliée au disque central (14a) ou à l'élément conjugué (12 ; 14 ; 44), respectivement, par un soudage élastique à la flexion ou, respectivement, par une zone de transition amincie (14c).

4. Membrane selon l'une des revendications 1 à 3, caractérisée par le fait qu'en vue de rendre linéaire le comportement en réponse et/ou de compenser la température, l'élasticité de la bague de torsion (14b) est choisie d'une manière correspondante par rapport au disque (14a) et/ou la bague de torsion (14b) est précontrainte d'une manière correspondante par rapport au disque (14a) ou à l'élément conjugué (12), respectivement.

5. Dispositif dynamométrique sous la forme d'une boîte dynamométrique comprenant au moins une membrane selon l'une des revendications 1 à 4, caractérisé par le fait que le capteur se compose d'au moins un générateur de Hall (24) et d'au moins un aimant (22) qui sont disposés contre le côté intérieur de la membrane (10) ou de l'élément conjugué (12), respectivement, dans une position relative l'un par rapport à l'autre qui est telle que, lors de l'introduction d'une force, un déplacement relatif entre le générateur de Hall (24) et l'aimant (22) produise un signal correspondant.

6. Dispositif dynamométrique sous la forme d'une boîte dynamométrique comprenant au moins une membrane selon l'une des revendications 1 à 4, ou selon la revendication 5, caractérisé par le fait que l'élément conjugué est une plaque de base rigide (12).

7. Dispositif dynamométrique sous la forme d'une boîte dynamométrique comprenant au moins une membrane selon l'une des revendications 1 à 4, ou selon la revendication 5, caractérisé par le fait que la membrane (14) est reliée à une autre membrane (14 ; 44) dont le comportement à la flexion est inverse et qui est disposée parallèlement à la première membrane.

8. Dispositif dynamométrique selon la revendication 7, caractérisé par le fait que les deux membranes (14 ; 44) qui sont disposées l'une au-dessus de l'autre sont disposées de manière symétrique par rapport à un plan.

9. Dispositif dynamométrique sous la forme d'une boîte dynamométrique comprenant au moins une membrane selon l'une des revendications 1 à 4, ou selon l'une des revendications 6 à 8, caractérisé par le fait que plusieurs capteurs (22, 24) sont disposés en étant répartis sur la périphérie et/ou axialement.

10. Dispositif dynamométrique selon la revendication 9, caractérisé par le fait qu'en vue de rendre linéaire le comportement en réponse du dispositif dynamométrique, les capteurs sont disposés selon un décalage déterminé les uns par rapport aux autres.

Fig. 1

Fig. 2

Fig. 3

Fig. 4